(19) Europäisches Patentamt

European Patent Office

Office européen des brevets

(11) Publication number: **0 436 196 A2**

(12) **EUROPEAN PATENT APPLICATION**

(21) Application number: 90125044.9

(22) Date of filing: 20.12.90

(51) Int. Cl.5: **C08L 23/04, C08J 5/18**

(30) Priority: 25.12.89 IL 92868

(43) Date of publication of application:
10.07.91 Bulletin 91/28

(84) Designated Contracting States:
AT BE CH DE DK ES FR GB GR IT LI LU NL SE

(71) Applicant: SYFAN
Kibbutz Sa'ad
Doar Na HaNegev, 85140(IL)

(72) Inventor: Sarid, Israel
Kibbutz Sa'ad
Doar Na HaNegev 85140(IL)
Inventor: Ginsberg, Moshe
Kibbutz Sa'ad
Doar Na HaNegev 85140(IL)
Inventor: Ben-Ishai, Ofer
Kibbutz Sa'ad
Doar Na HaNegev 85140(IL)

(74) Representative: Dragotti, Gianfranco et al
SAIC BREVETTI s.r.l. Viale Bianca Maria, 15
I-20122 Milano(IT)

(54) Shrink films.

(57) Shrink films having controlled adhesion and shrink properties are described. The films are based on blends of very low density polyethylene and ethylene / α-olefin copolymers, and may further comprise vinyl acetate or acrylate-based copolymers in additive amounts.

Fig. 1

## SHRINK FILMS

### FIELD OF THE INVENTION

The present invention relates to shrink films having controlled adhesion and shrink properties. More particularly the invention relates to films based on blends of very low density (VLD) polyethylene and ethylene/ α-olefin copolymers.

### BACKGROUND OF THE INVENTION

Shrink films are commonly employed for wrapping food products and other articles, and a number of shrink films are known in the art.

Ethylene-based shrink films are known, e.g., from U.K. Patent 2,097,324. Also known are multi-layer polyolefin films, such as those described in U.S. Patent No. 4,352,849 to Mueller. In the said U.K. Patent 2,097,324, it is taught that shrink films can be made from a single low density ethylene polymer resin, provided that certain specific conditions are met. According to this patent, it is possible to employ copolymers of ethylene with at least one $C_8$-$C_{18}$ α-olefin, if this copolymer has a melt index comprised between 0.1 and 4.0 g/10 min., a density comprised between 0.90 to 0.94 g/cm$^3$, a stress exponent above 1.3, and two distinct crystallite melting regions below 128°C as determined by differential scanning calorimetry (DSC), and the temperature difference between both regions is at least 15°C. Under these conditions, this copolymer can be used, in admixture with a polymer selected from a group consisting of ethylene homopolymers and copolymers of ethylene with an ethylenically unsatured comonomer, to produce shrink films.

### SUMMARY OF THE INVENTION

It has now been surprisingly found, and this is an object of the present invention, that it is possible to prepare shrink films of excellent quality, optical properties, mechanical and shrink properties, by using copolymers of ethylene with an α-olefin having only one crystallite melting region, provided that this copolymer is admixed with a Very-Low-Density polyethylene having specific properties.

It has further been found, and this is another object of the invention, that it is possible to provide films of the type described above, which have controllable adhesion properties, and which may be made adhesive to a variety of surfaces without the need for glueing materials.

It is still another object of invention to provide shrink films having low shrink forces, and which can be employed in wrapping fragile or deformable objects.

The term Very-Low-Density (VLD) Polyethylene is used herein to identify ethylene-based homo and copolymers, having a density of about d = 0.915 or less. Comonomers employed in the ethylene-based polymer may be of any suitable type, provided that they lead to the desired mechanical and chemical properties. The skilled chemist will be able to select an appropriate VLD polyethylene from those commercially available, or to prepare it by conventional techniques for the copolymerization of ethylene, which are well known in the art. Such methods are described, e.g., in the aforementioned U.K. Patent No. 2,097,324.

### DETAILED DESCRIPTION OF THE INVENTION

The shrink films according to the invention are made by stretching in two planar directions a homogeneous composition comprising:
(1) about 7-80% Very-Low-Density polyethylene, having a melt index of at least 2 g/10 min., preferably 5 g/10 min. or more;
(2) about 93-20% of a linear copolymer of ethylene with one or more α-olefin having only one crystallite melting region; and
(3) 0-15% by weight of vinyl acetate or acrylate in a vinyl acetate or acrylate-based copolymer, preferably an ethylene copolymer.

This latter copolymer may be, e.g., any appropriate VLD polymer, as long as it contains sufficient acetate or acrylate residue to give the desired content thereof in the blend. Examples of suitable copolymers are, e.g., Lotryl HY 6060 and Lotryl AY 8670 (Norsolor, France), which are random copolymers of ethylene and an ester type acrylic derivative obtained by high pressure polymerization, containing 28% and 20% by weight respectively of acrylic ester. Other suitable copolymers are those based on ethylene-vinyl acetate, such as Riblene D/EVA MV1055 (Enichem, Italy) or Escorene UL 00728 (Exxon, U.S.A.).

It should be further noted that the use of high contents of acrylate or acetate, above 20%, is not normally recommended in the art for preparing films, while surprisingly such high contents are convenient when preparing films according to the invention. Thus, for instance, the highest recommended content of vinyl acetate for film production in Escorene is 20%, while UL 00728, which can conveniently be employed in the films of the invention, has a vinyl acetate content of 28%. Likewise, the highest recommended acrylic ester content in the Lotryl copolymers, for film preparations, is only 18%. However, while high content acetate or acrylate copolymers can be used according to the invention, it should be understood that this constitutes and advantage and not a limitation,and that low contents can also be employed to prepare the films of the invention.

Most surprisingly, and contrary to what was taught in the art, compositions of this type can be used to provide shrink films, although only one crystallite melting region exists in the copolymer of ethylene with the $\alpha$-olefin.

Still surprisingly, the film can be made using quite high stretch ratios, viz., by stretching it in the x and y axes up to 7 - 8 times its original linear dimension. Films so obtained will retain excellent mechanical properties and strength.

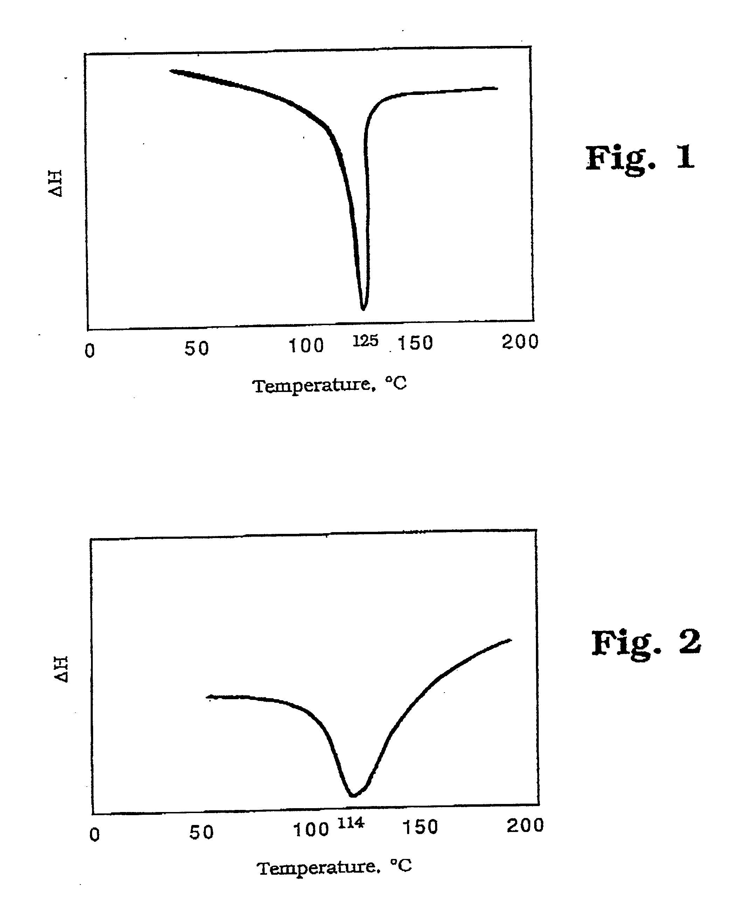

According to a preferred embodiment of invention, the copolymer of ethylene with the $\alpha$-olefin is a linear copolymer of ethylene with 1-octene, which can for instance be DOWLEX 2042E polythylene, which is commercially available. In contrast to, e.g., DOWLEX 2045, which is described in GB 2,057,324, this product has a single crystallite melting region below 128° C, as can be seen from its DSC, which is shown in Fig. 1.

Stretching of the film is carried out at a temperature well below the DSC peak of the copolymer of ethylene with the $\alpha$-olefin. As will be apparent to a person skilled in the art, this is a surprising way to operate since it is not customary to be able to stretch the film at temperatures substantially below the DSC peak of the major component of the blend.

Preferably, the stretching will be carried out at temperatures about the DSC peak of the VLD polymer. Thus, for instance, if Norsolor MW 1960 is employed, its DSC peak, shown in Fig. 2, will be at about 114° C. Thus, stretching can be conveniently carried out in the range 105-120° C, and the man of the art will be able to determine the best stretching temperature for a given blend.

Throughout this specification values for the melt index given are measured according to ASTM D-1238, in units of g/10 min., and densities according to ASTM D-1505.

According to a preferred embodiment of invention, the VLD polyethylene is a copolymer of ethylene with an $\alpha$-olefin. This VLD polymer should have a melt index of at least 2 g/10 min. A suitable polymer is, e.g., the copolymer of polyethylene with butene which is commercially available as Norsolor MW 1920- (d = 0.9, MI = 7.5) or Norsolor MW 1960 (d = 0.895, MI = 12). However, any other suitable VLD polyethylene can be employed, as detailed above and hereinafter.

As stated, the invention provides a way to obtain shrink film having controlled critical properties, which is quite unprecedented. On the one hand, it is possible to control the shrink force of the film, by varying the ratio of the two major components, viz., the VLD polyethylene and the ethylene/$\alpha$-olefin copolymer, and on the other hand it is possible to obtain films having high self-adhesion properties, or to avoid adhesion almost entirely, by varying the content of the third component, viz., the vinyl acetate or acrylate-based copolymer. This component is present and effective in "additive amounts", viz., amounts ranging between slightly above zero and about 15 wt% of the total polymer, based on vinyl acetate or acrylate. When high contents of this additive are present, however, it will influence the shrink force as well, in the manner explained hereinafter. Likewise, the ratio of the two major components influences the adhesion properties. Thus, varying the proportions of the aforesaid three components permits to obtain a wide range of properties of the shrink film. However, total contents of vinyl acetate or acrylate above 7% will cause poor optical and adhesion properties.

As will be apparent to a person skilled in the art, other additives may be present in trace amounts in the blend, e.g., to impart specific surface properties or heat or UV stability. Such additives can of course be employed whenever desired, as long as they do not interfere with the behavior of the film.

Films obtained according to the invention will shrink 0 - 80% in each direction when immersed in an oil bath at temperatures up to 140° C. A representative shrink tension will be, e.g., 75 g/mm$^2$ at 120° C. Shrink tension is measured according to ASTM D-2838.

In a preferred embodiment of the invention, the films are employed to prepare labels of the "shrink-and-cling" type, which are particularly suitable to be used as labels on deformable objects, e.g., soft drink bottles made of plastic material. While labels made with a film according to the invention can of course be used in conjunction with rigid articles, the ability to control the shrink tension, as well as the self-adhesion properties of the films, as herein discussed, make the films of the invention very suitable and convenient for the purpose of labelling deformable objects easily and quickly and, in many cases, without the need for any added glueing material.

Films provided with self-adhesion properties will not adhere only to themselves, but will also adhere to a variety of surfaces like PVC, polypropylene, polyethyleneterephthalate, etc., although the adhesion properties are conveniently measured in the following examples as film - film adhesion, to provide standard reference values.

The invention will now be further illustrated with reference to the following examples, which are provided for the purpose of illustration, and which are not intended to constitute a limitation thereof.

Example 1

A number of different blends based on VLD polyethytlene (Norsolor MW 1920) and on DOWLEX 2042E (d = 0.93, MI = 1.0) were prepared, which were then used to produce shrink films according to the following procedure. The components were blended in a dry blender, and metering was carried out using a computerized weighing system. The various blend compositions are detailed in Table I.

Table I

| Component | Content in Blend (%) | | | | |
|---|---|---|---|---|---|
| | A | B | C | D | E |
| Norsolor MW 1920 | 50 | 25 | 25 | 25 | 15 |
| Dowlex 2042E | 50 | 75 | 72.5 | 70 | 72.5 |
| EVA MV1055 | - | - | 2.5 | 2.5 | 12.5 |
| Additives | - | - | - | 2.5 | - |

Films having a mean thickness of 16μ were prepared by the process described in "Schotland, COEX Europe '86", R. Rubin, p. 123", (with the exception that no coextrusion was needed).

The shrink tension was measured as a function of the ratio of the two major components, and the results are shown in Table II.

4

Table II

Blend

| Norsolor/ Dowlex Ratio | A | B | C | D | E |
|---|---|---|---|---|---|
| | 1 | 0.33 | 0.344 | 0.357 | 0.207 |
| SHRINK TENSION | 62 | 71 | 87 | 74 | 50 |

As seen, Blend E, containing a high amount of EVA has a lower shrink tension in spite of the lower Norsolor/Dowlex Ratio.

Example 2

The samples shown in Table I above were prepared as described in Example 1, and the adhesion properties of the resulting films were measured as a function of their composition.

Adhesion was measured as "self adhesion at break", by preparing films having an overlap of 3 cm. The samples were heat-pressed at 110°C press surface temperature for 1 second with a pressure of 1 kg/cm². Strips obtained according to the above procedure, having a width of 25 mm, and in which the overlap is centrally positioned, were put under tension in a tensile tester (J.J. Tensile Testing, U.K.) and the force necessary to obtain film separation was measured.

The results of this test are reported in Table III below. It should be understood, however, that the test is provided only for the purpose of illustration, and in order to quantify the adhesion properties of the film. The man of the art, however, will be able qualitatively to judge on the adhesiveness of a given film by inspection and touch. It should be noted that the friction coefficient (C.O.F.) also provides a measure of film adhesion.

Table III also reports additional parameters of the tested films, such as Gloss / 45°C (measured by ASTM D-2459), Haze (ASTM D-1003) and C.O.F. (film-film friction co-efficient of ASTM D-1894).

5

## Table III

### Blend

| | A | B | C | D | E |
|---|---|---|---|---|---|
| Self adhesion Break [N] | 43 | 33 | 29 | 27 | 23 |
| Gloss [%] | 97 | 92 | 92 | 93 | 60 |
| Haze [%] | 1.5 | 1.5 | 2.1 | 1.6 | 8 |
| C.O.F. | 4.5 | 3.2 | 3.2 | 0.6 | 0.5 |

## Claims

1. A shrink film made by stretching in two planar directions a homogeneous composition comprising:
   (1) about 7-80% Very-Low-Density polyethylene, as defined in the specification, having a melt index of at least 2 g/10 min.;
   (2) about 93-20% of a linear copolymer of ethylene with one or more $\alpha$-olefin, having only one crystallite melting region; and
   (3) 0-15% in weight of vinyl acetate or acrylate in a vinyl acetate or acrylate-based copolymer.

2. A film according to claim 1, wherein the Very-Low-Density Polyethylene is a copolymer of ethylene with an $\alpha$-olefin, having a density of less than about 0.90 $g/cm^3$ and a melt index (1900° C/2.16 kg) of at least 5g/10 min.

3. A film according to claim 2, wherein the $\alpha$-olefin is butene.

4. A film according to any one of claims 1 to 3, wherein the linear copolymer of ethylene with the $\alpha$-olefin is a copolymer of ethylene with 1-octene.

5. A film according to claim 4, wherein the copolymer of ethylene with 1-octene is a DOWLEX polymer.

6. A self adhesive film, according to any one of claims 1 to 5, comprising about 0% to about 7% by weight of vinyl acetate or acrylate.

7. A film according to any one of claims 1 to 6, wherein the vinyl acetate or acrylate-based copolymer is an ethylene copolymer.

8. A film according to claim 1, which is stretched in two linear directions up to 8 times in each direction.

9. A film according to any one of claims 1 to 8, essentially as described and illustrated, with particular reference to the examples.

10. A label which is particularly suitable for labelling deformable articles, comprising a film according to any one of claims 1 to 9.

11. A method of labelling an article, comprising providing a label made of a film according to any one of claims 1 to 9, and causing this label to adhere to the article to be labelled by a shrink-and-cling action.

Fig. 1

Fig. 2